# EUROPÄISCHE PATENTSCHRIFT

(11) **EP 2 314 855 B1**
(45) Veröffentlichungstag und Bekanntmachung des Hinweises auf die Patenterteilung: **03.04.2013**
(21) Anmeldenummer: 10187439.4
(22) Anmeldetag: 13.10.2010
(51) Int. Cl.: F02M 25/07, F16K 3/24, F16K 11/07

(54) **Ventil zum Steuern eines Fluidstromes**
Valve for controlling a fluid flow
Soupape de commande d'un flux de fluide

(30) Priorität: 14.10.2009 DE 102009049422
(43) Veröffentlichungstag der Anmeldung: 27.04.2011
(73) Patentinhaber: Behr Thermot-tronik GmbH, 70806 Kornwestheim (DE)
(72) Erfinder: Willers, Eike, 70469 Stuttgart (DE); Panic, Predrag, 70178 Stuttgart (DE); Hess, Achim, 71404 Korb (DE); Schüssler, Markus, 70569 Stuttgart (DE)
(74) Vertreter: Grauel, Andreas

(56) Entgegenhaltungen:
- DE-A1-102006 033 585
- JP-A- 2000 074 230
- US-A- 4 236 547
- US-A1- 2007 194 260

## Beschreibung

Die Erfindung betrifft ein Ventil zum Steuern eines Fluidstromes gemäß dem Oberbegriff des Anspruches 1 und eine Anordnung zur Rückführung und Kühlung von Abgas einer Brennkraftmaschine gemäß dem Oberbegriff des Anspruches 11.

Bei Brennkraftmaschfnen, insbesondere bei Dieselmotoren oder auch bei Ottomotoren, werden Anordnungen zur Rückführung und Kühtung von Abgas zu der Brennkraftmaschine verwendet. Dabei wird ein Teil des Abgases aus einer Abgasleitung abgezweigt, durch eine Abgasrückführleitung geleitet und einer Ladefuftfeitung oder einer Anseugleitung zugeführt. Das abgezweigte Abgas wird dabei in einem Abgaswärmeübertrager gekühlt. Die Rückführung des Abgases in die Ladeluftleitung oder in die Ansaugleitung vorteilhaft zwischen Luftfilter und Verdichter hat unter anderem die Aufgabe, die Stickoxidemissionen der Brennkraftmaschinen zu verringern. Die Temperatur des heißen Abgases wird dabei in dem Ahgaswärmeüberdrager reduziert, um möglichst geringe Mischtemperaturen zwischen der Ladeluft und dem rückgeführten Abgas zu erzielen. Mittels einer Bypassabgasleitung kann das durch die Abgasrückführleitung geleitete Abgas an dem Abgaswärmeübertrager vorbeigeleitet werden, so dass das durch die Abgasrückführleitung der Ladeluft zugeführte Abgas, welche durch die Bypassabgasleitung geleitet wird, nicht durch den Abgaswärmeübertrager gekühlt wird. Mittels eines als Ventil ausgebildeten Abgassteuerorganes kann gesteuert oder geregelt werden, ob das von der Brennkraftmaschine durch die Abgasrückführleitung zu dem Abgassteuerorgan geleitete Abgas dem Abgaswärmeübertrager, der Bypassabgasleitung oder weder dem Abgaswärmeübertrager noch der Bypassabgasleitung zugeleitet wird, d. h. keine Abgasrückführung zu der Ladeluftleitung durchgeführt wird.

In dem Ventil als Abgassteuerorgan ist ein Ventilschrieber oder ein Schieberkolben an zwei Lagerringen gelagert. Je nach Stellung des Ventilschlebers wird entweder eine Eintrittsöffnung des Ventils geschlossen, eine fluidleitende Verbindung von der Eintrittsöffnung des Ventils zu der Bypassabgasleitung hergestellt oder eine fiuidleitende Verbindung von der Eintrittsöffnung des Ventils zu dem Abgaswärmeübertrager bzw der Abgasrückführleitung, welche zu dem Abgaswärmeübertrager führt, herstellt. Der Ventilschieber wird zwischen den verschiedenen Stellungen translatorisch von einem elektrischen Aktuator bewegt. An dem Ventilschieber, insbesondere einer Mantelfläche des Ventilschiebers, bilden sich dabei Ablagerungen, z. B. Rußablagerungen oder Verschmutzungen. Diese Rußablagerungen zwischen dem Ventilschieber bzw dem Schieberkolben und den Lagerungen können zu einem Verkleben zwischen der Mantelfläche des Ventilschlebers und der Lagerringe führen. Die Ablagerungen können außerdem dazu führen, dass aufgrund dieser der Ventilschleber nicht mehr beweglich ist und sich damit festsetzt, so dass es zu einem Ausfall der Funktion des Ventils kommt. Zum Losreißen bzw. zum Entfernen der Ablagerungen von dem Ventilschieber sind große Kräfte erforderlich, die möglicherweise die Antriebskraft des elektrischen Aktuators zum Bewegen des Ventilschiebers übersteigen.

Die DE 10 2006 033 585 A1 zeigt ein gattungsbildendes Ventil für eine Anordnung zur Rückführung und Kühlung von Abgas einer Brennkraftmaschine als Abgassteuerorgan. Die Lagerringe des Ventils weisen dabei in einem Längsschnitt im Wesentlichen eine Rechteck- bzw. Quadratform auf, so dass dadurch von den Lagerringen Ablagerungen an dem Ventilschieber nur unzureichend entfernt werden können.

Die Aufgabe der vorliegenden Erfindung besteht deshalb darin, ein Ventil zum Steuern eines Fluidstromes und eine Anordnung zur Rückführung und Kühlung von Abgas einer Brennkraftmaschine zur Verfügung zu stellen, bei dem Ablagerungen auf einem Ventilschieber des Ventils sicher und zuverlässig mit einem geringen technischen Aufwand vermieden werden können. Das Ventil und die Anordnung sollen zuverlässig im Betrieb arbeiten.

Diese Aufgabe wird gelöst mit einem Ventil zum Steuern eines Fluidstromes, insbesondere eines Abgas- oder Ladeluftstromes, umfassend ein Ventilgehäuse, eine Eintrittsöffnung für das Fluid, eine erste Äuslassöffnung für das Fluid, eine zweite Auslassöffnung für das Fluid, einen in Richtung einer Schieberachse bewegbaren Ventilschieber mit einer Mantelfläche zur Steuerung der aus der ersten Auslassöffnung und/oder der zweiten Austassöffnung ausleitbaren Menge an Fluid, wenigstens eine Gleitlagerelement mit einer Lagerfläche zur Lagerung und Abdichtung des Ventilschiebers an der Mantelfläche und mit wenigstens einer Stirnfläche, wobei vorzugsweise die Mantelfläche und die Lagerfläche parallel zu der Schieberachse ausgerichtet sind, wobei an der wenigstens einen Stirnfläche wenigstens eine Schabkante zum Entfernen von Ablagerungen auf dem Ventilschieber ausgebildet ist, indem an der Schabkante die Lagerfläche zu der wenigstens einen Stirnfläche in einem spitzer Winkel ausgerichtet ist. Die Schabkante umfasst vorzugsweise die Kante zwischen wenigstens einer Stirnfläche und der Lägerfläche und außerdem die wenigstens Stirnfläche, welche in einem spitzen Winkel zu der Lagerfläche ausgerichtet ist.

Die Schabkanten ermöglichen in vorteilhafter und einfacher Weise, dass Ablagerungen an dem Ventilschieber, insbesondere einer Mantelfläche des Ventilschiebers, bei einer Translationsbewegung des \/entilschiebers auf einfache und effektive Weise von dem Ventilschieber entfernt werden. Dadurch kann ein Ausfall oder ein Schaden am Ventil aufgrund von Ablagerungen, z. B. Rußablagerungen, verhindert werden. Insbesondere aufgrund der hohen Betriebstemperaturen des Ventils in einer Anordnung zur Rückführung und Kühlung von Abgas einer Brennkraftmaschine als Abgassteuerorgan ist eine effektive Reinigung des Ventilschiebers erforderlich, um einen zuverlässigen Betrieb des Ventils zu ermöglichen.

Erfindungsgemäß tritt der spitze Winkel zwischen der Lagerfläche und der wenigstens einen Stirnfläche in einem Längsschnitt in Richtung der Schieberachse auf.

In einer weiteren Ausgestaltung liegt der spitze Winkel zwischen 80° und 20°, vorzugsweise zwischen 70° und 30°, insbesondere zwischen 60° und 40°.

In einer ergänzenden Ausführungsform ist an dem wenigstens einen Gleitlagerelement im Bereich der wenigstens einen Schabkante wenigstens eine Aussparung ausgebildet. Die wenigstens eine Aussparung bildet sich einerseits aufgrund des spitzen Winkels zwischen der Lagerfläche und der Schabkante bzw. Stirnfläche. Außerdem können in der Aussparung in vorteilhafter Weise von der Schabkante entfernt Ablagerungen kurzzeitig aufgenommen werden.

Vorzugsweise ist die wenigstens eine Aussparung bezüglich der Schieberachse radial nach der Lagerfläche vorhanden und/oder die wenigstens eine Aussparung ist an der Stirnfläche ausgebildet.

In einer Variante ist das wenigstens eine Gleitlagerelement ein Lagerung. Der Lagerring weist in einem Schnitt senkrecht zu einer Schieberachse beispielsweise eine Kreisform, eine Rechteckform oder eine quadratische Form auf.

Zweckmäßig ist das wenigstens eine Gleitlagerelement einteilig mit dem Ventilgehäuse oder als gesondertes Bauteil ausgebildet.

Erfindungsgemäß weist das wenigstens eine Gleitlagerelement wenigstens eine Führungsfläche, vorzugsweise wenigstens drei Führungsflächen, auf zur axialen Zentrierung des Ventilschiebers beim Einführen in das wenigstens eine Gleitlagerelement. Die Führungsflächen oder Führungsstege dienen dazu, bei einem radialen Versatz des Ventilschiebers bezüglich der Schieberachse den Ventilschieber bezüglich des radialen Versatzes auszurichten, so dass der Ventilschieber in das Gleitlageelement bzw. den Lagerring eingeführt werden kann.

Erfindungsgemäß ist die Lagerfläche zu der wenigstens einen Stirnfläche an der wenigstens einen Führungsfläche in einem stumpfen Winkel ausgerichtet und die wenigstens eine Führungsfläche ist in tangentialer Richtung bezüglich der Schieberachse partiell ausgebildet.

In einer weiteren Ausgestaltung liegt der stumpfe Winkel zwischen 100° und 170°, vorzugsweise zwischen 120° und 150°, insbesondere zwischen 130° und 140°.

In einer weiteren Ausgestaltung weist die Lagerfläche des wenigstens einen Gleiflagerelementes axial zu der Schieberachse eine unterschiedliche Ausdehnung auf, so dass sich eine asymmetrische Steuerkante und/oder eine asymmetrische Schabkante an dem wenigstens einen Gleitlagerelement ausbildet. Eine asymmetrische Steuerkante oder Schabkante bewirkt, das bei einem Bewegen des Ventilschiebers von einer zweiten Stellung zu einer ersten Stellung zur Herstellung einer fluidleitenden Verbindung von der Eintrittsöffnung zu einem ersten Auslassraum zwischen dem Ventilschieber und dem ersten Gleitlagerelement kein vollständiger Ringspalt entsleht, sondern nur zunächst einzelne Teilbereiche eines vollständig geschlossenen Ringspaltes. Dadurch kann in einer Anfangsphase der Öffnung der fluidleitenden Verbindung von der Eintrittsöffnung zu der ersten Auslassöffnung bzw dem ersten Auslassraum ein gezielteres Steuern des Fluidstromes ermöglicht werden. Außerdem gewirkt eine asymmetrische Schabkante, dass bei tangential um die Mantelfläche angeordneten Ablagerungen diese Ablagerung von der asymmetrischen Schabkante beim Bewegen des Ventilschiebers bzw. oder des Schieberkolbens diese Ablagerung nicht tangential betrachtet vollständig von der Schabkante kontaktiert werden, sondern tangential betrachtet zunächst nur lokal, so dass hier Spannungsspitzen zwischen der Schabkante und den Ablagerungen auftreten und dadurch das Ablösen der Ablagerungen von der Mantelfläche des Ventilschiebers verbessert oder erhöht wird.

In einer weiteren Ausgestaltung beträgt die Ausdehnung des Gleitlagerelementes, insbesondere des Lagerringe, an der Lagerfläche in Richtung der Schieberachse weniger als 4, 3, 2, 0,8 oder 0,5 mm. Bei einer asymmetrischen Steuerkante oder Schieberkante ist die Ausdehnung der lagerfläche, des Ventilschiebers in Richtung der Schieberachse nicht konstant und bei einer fehlenden Ausbildung einer asymmetrischen Steuerkante oder Schabkante ist die Ausdehnung der Lagerfläche des Ventilschiebers in Richtung der Schieberachse konstant. Eine kleine Größe der Lagerfläche bewirkt, dass hohe Kräfte oder Spannungen pro Flacheneinheit zwischen der Lagerfläche und der Mantelfläche des Ventilschiebers vorhanden sind, so dass dadurch in vorteilhafter Weise Ablagerungen an dem Ventilschieber, insbesondere der Mantelfläche des Ventilschiebers, besonders gut und effektiv abgelöst werden können.

In einer ergänzenden Variante weist das Ventil erstes und zweites Gleitlagerelement auf und das ventilgehäuse sowie die beiden Gleitlagerelemente schließen einen Raum ein, in welchem der Ventilschieber angeordnet ist, so dass der Raum bei einer Anordnung des Ventilschiebers in dem Raum ein Ringraum ist und in den Raum die Eintrittsöffnung mündet.

In einer weiteren Variante weist das Ventil einen ersten Auslassraum und einen zweiten Auslassraum auf, die erste Auslassöffnung mündet in den ersten Auslassraum und die zweite Auslassöffnung mündet in den zweten Aus-lassraum.

In einer weiteren Ausgestaltung besteht in einer ersten Stellung des Ventilschiebers zwischen, dem Raum und damit der Eintrittsöffnung und dem ersten Auslassraum eine fluidleitende Verbindung und zwischen dem Raum und dem zweiten Auslassraum besteht keine fluidleitende Verbindung, indem der Ventilschieber einen Lagerraum zwischen der Lagerfläche des ersten Gleitlagerelementes frei gibt und den Lagerraum zwischen der Lagerfläche des zweiten Gleitlagerelementes verschließt und in einer zweiten Stellung des Ventilschiebers zwischen dem Raum und damit der Eintrittsöffnung und dem ersten Auslassraum keine fluidleitende Verbindung besteht und zwischen dem Raum und dem zweiten Auslassraum keine fluidleitende Verbindung besteht, indem der Ventilschieber den Lagerraum zwischen der Lagerfläche des ersten Gleitlagerelementes verschließt und den Lagerraum zwischen der Lagerfläche des zweiten Gleitlagerelementes verschließt und in einer dritten Stellung des Ventilschiebers zwischen dem Raum und damit der Eintrittsöffnung und dem ersten Auslassraum keine fluidleitende Verbindung besteht und zwischen dem Raum und dem zweiten Auslassraum eine fluidleitende Verbindung besteht, indem der Ventilschieber den Lagerraum zwischen der Lagerfläche des ersten Gleitlagerelementes verschließt und den Lagaerraum zwischen der Lagerfläche des zweiten Gleitlagerdementes frei gibt.

In einer weiteren Ausgestaltung wird von einem Sensor eine Ablagerung an dem Ventilschieber erfasst und bei einer vorhandenen Ablagerung auf dem Ventilschieber der Ventilschieber bewegt.

In einer weiteren Ausgestaltung wird die Ablagerung von dem Sensor erfasst, indem ein Reibwiderstand zwischen dem Ventilschieber und wenigstens einem Gleitlagerelement erfasst wird.

Erfindungsgemäße Anordnung zur Rückführung und Kühlung von Abgas einer Brennkraftmaschine, insbesondere eines Dieselmotors, umfassend eine Abgasleitung, vorzugsweise mit einer Abgasturbine, eine Ladeluftleitung mit einem, vorzugsweise von der Abgasturbine antreibbaren, Ladeluftverdichter, eine Abgasrückführleitung zur Leitung von Abgas von der Abgasleitung zu der Ladeluftleitung, einen Abgaswärmeübertrager zur Kühlung von Abgas in der Abgasrückführleitung, eine Bypassabgasleitung, welche den Abgaswärmeübertrager umgeht, ein Abgassteuerorgan zur Steuerung und/oder Regelung der durch den Abgaswärmeübertrager und/oder die Bypassabgasleitung leitbaren Menge an Abgas pro Zeiteinheit, wobei das Abgassteuerorgan als ein in dieser Schutzrechtsanmeldung beschriebenes Ventil ausgebildet ist und vorzugsweise die erste Auslassöffnung mit der Bypassabgasleitung oder Niederdruckleitung verbunden ist, die zweite Auslassöffnung mit dem Abgeswärmeübertrager oder der Hochdruckleitung verbunden ist und die Einlassöffnung mit der Abgasrückführleitung von der Brennkraftmaschine verbunden ist.

Im Nachfolgenden werden Ausführungsbeispiele der Erfindung unter Bezugnahme auf die beigefügte Zeichnung näher beschrieben. Es zeigt:
- Fig. 1: ein vereinfachtes Systembild einer Brennkraftmaschine mit einer Anordnung zur Rückführung und Kühlung von Abgas des Brennkraftmaschine mit einem Abgassteuerorgan,
- Ag.2: einen vereinfachten Schnitt des Abgassteuerorganes als Ventil mit einem Gleitlagemlement,

- Fig.3: einen Längsschnitt des Gleitlagerelementes gemäß Fig. 2 in einem ersten Ausführungsbeispiel,
- Fig. 4: einen Längsschnitt des Gleitlagerelementes gemäß Fig. 2 in einem zweiten Ausführungsbeispiel,
- Fig. 5: eine perspektivische Teilansicht des Gleitlagerelementes gemäß Fig. 2 in einem dritten Ausführungsbeispiel und
- Fig. 6: eine Vorderansicht des Gleitlagerelementes gemäß Fig. 2 in einem vierten Ausführungsbeispiel.

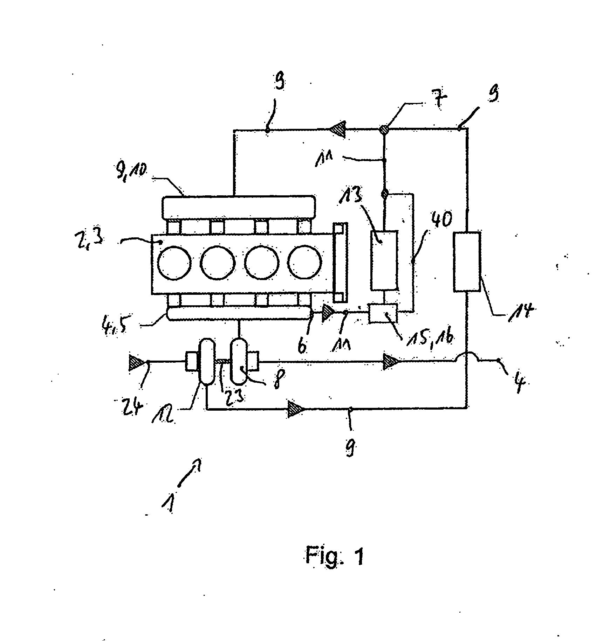

In Fig. 1 ist ein Systembild einer Brennkraftmaschine 2 mit einer Anordnung 1 zur Rückführung und Kühlung von Abgas der Brennkraftmaschine 2 dargestellt. Die Brennkraftmaschine 2 ist dabei ein Dieselmotor 3 und die Rückführung eines Teils des Abgases dient dazu, die Emissionen und Stickoxiden durch den Dieselmotor 3 im Abgas zu verringern.

Das aus der Brennkraftmaschine 2 ausströmende Abgas wird zurächst in einem Abgaskrümmer 5 als Abgasleitung 4 gesammelt, anschließend durch die Abgasleitung 4 zu einer Abgasturbine 8 geleitet und anschließend von der Abgasturbine 8 durch einen weiteren Abschnitt der Abgasleitung 4 in die Umgebung abgegeben. Das aus der Brennkraftmaschine 2 ausströmende Abgase treibt die Abgasturbine 8 an. Von der Abgasturbine 8 wird ein Ladeluftverdichter 12, der ebenfalls als Turbine ausgebildet ist, angetrieben. Hierzu sind die Abgasturbine 8 und der Ladeluftverdichter 12 mittels einer Welle 23 miteinander verbunden Der Ladeluftverdichter 12 saugt durch eine Ladeluftleitung 9 an einer Einsaugöffnung 24 Luft aus der Umgebung der Brennkraftmaschine 2 an. Die durch die Einsaugöffnung 24 angesaugte Ladeluft wird dabei von dem Ladeluftverdichter 12 verdichtet und anschließend unter Druck der Ladeluftleitung 9 zugeführt in der Ladeluftleitung 9 ist ein Ladeluftwärmeübertrager 14, angeordnet. Die verdichtete und damit erwärmte Ladeluft wird in dem Ladeluftwärmeübertrager 14 gekühlt, indem ein Kühlfluid, d. h. Umgebungsluft, zu dem Ladeluftwärmeübertrager 14 geleitet wird und damit die erwärmte und verdichtete Ladeluft kühlt.

An einer Entnahmestelle 6 in dem Abgaskrümmer 5 wird Abgas in eine Abgasrückführleitung 11 eingeleitet. In der Abgasrückführleitung 11 ist in analoger Weise zu der Ladeluftleitung 9 ein Abgaswärmeübertrager 13 angeordnet. In dem Abgaswärmeübertrager 13 wird das Abgas mittels des Kühlfluides abgekühlt Das durch die Abgasrückführleitung 11 geleitete Abgas wird an einer Rückführstelle 7 in der Ladetuftleitung 9 der Ladeluftleitung 9 zugeführt. In Strömungsrichtung der Ladeluft nach der Rückführstelle 7 befindet sich in der Ladeluftleitung 9 sowohl Luft aus der Umgebung der Brennkraftmaschine 2 als auch Abgas, das sich mischt. Dieses Gemisch wird anschließend in einen Einlasskrümmer 10 als Ladeluftleitung 9 eingeleitet und von dort für die Verbrennung in Brennräumen der Brennkraftmaschine 2 als Hubkolbenbrennkraftmaschine genutzt. Das Abgas wird dabei in Strömungsrichtung des Abgases in der Abgasleitung 4 vor der Abgasturbine 8 entnommen, so dass es sich um eine Hochdruckabgasrückführung handelt. Abweichend hiervon kann es sich auch um eine Niederdruckabgasrückführung handeln, bei der das Abgas in Strömungsrichtung des Abgases in der Abgasleitung 4 erst nach der Abgasturbine 8 entnommen wird (nicht dargestellt).

Die Anordnung 1 ist mit einem Ventil 16 als Abgassteuerorgan 15 versehen. Durch die Abgasrückführleitung 11 von der Brennkraftmaschine, die an der Entnahmestelle 6 der Abgasleitung 4 Abgas aufnimmt wird das Abgas dem Ventil 16 zugeführt. Mittels des Ventiles 16 wird gesteuert, ob das dem Ventil 16 durch die Abgasrückführleitung 11 zugeführt Abgas entweder nur durch den AbgaswärmeüHbertrager 13, nur durch eine Bypassabgasleitung 40 geleitet wird oder durch die Abgasrückführleitung 11 kein Abgas geleitet wird, d. h. das Ventil 16 die Abgasrückführleitung 11 verschließt, so dass weder durch den Abgaswärmeübertrager 13 noch durch die Bypassabgasleitung 40 Abgas geleitet wird, so dass zu der Rückführstellung 7 kein Abgas geleitet Wird. Die Bypassabgasteitung 40 umgeht dabei bei der Leitung des Abgases von der Entnahmestelle 6 zu der Rückführstelle 7 den Abgaswärmeübertrager 13, so dass bei der Rückführung des Abgases das Abgas nicht gekühlt wird bei einer Leitung durch die Bypassabgasleitung 40. Nach einem Kaltstart der Brennkraftmaschine 2 soll das durch die Abgasrückführleitung 11 rückgeführte Abgas nicht durch dem Abgaswärmeübertrager 13 gekühlt werden, so dass das gesamte rückgeführte Abgas mittels des Ventils 16 durch die Bypassabgasleitung 40 geleitet wird. Dadurch wird bei einem Kaltstart der Brennkraftmaschine 2 die Warmlaufphase der Brennkraftmaschine 2 verkürzt und damit ein höherer Ausstoß von. Emissionen bei einer betriebskalten Brennkraftmaschine 2 reduziert werden. Nach dem Abschließen der Kaltlaufphase und einer Brennkraftmaschine 2 mit normaler Betriebstemperatur wird das rückgeführte Abgas nicht mehr durch die Bypassleitung 40 geleitet, sondern durch den Abgaswärmeübertrager 13. Dies wird mittels des Ventils 16 gesteuert und/oder geregelt.

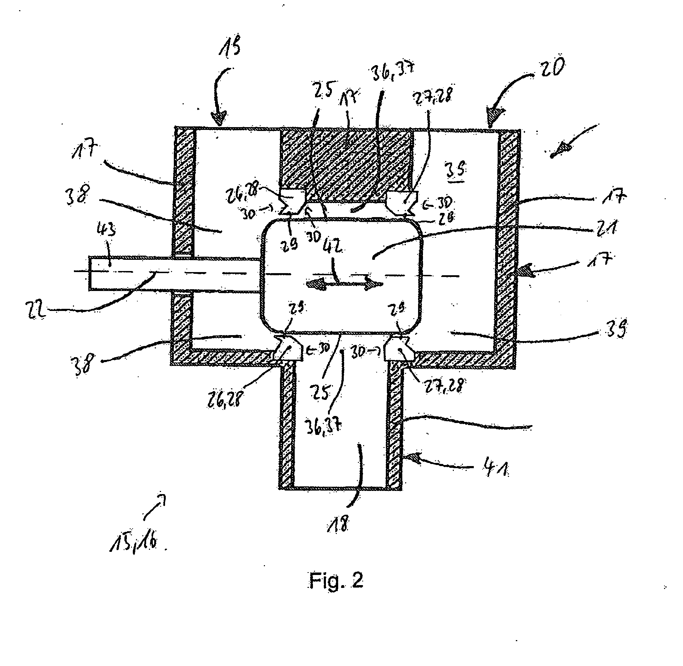

Das in Fig. 2 dargestellte Ventil 16 weist ein Ventilgehäuse 17 auf (Fig. 2). Das Ventilgehäuse 17 ist mit einem Eintrittsstutzen 41 versehen, der eine Eintrittsöffnung 18 für das Abgas ausbildet. Durch die Eintrittsöffnung 18 Wird somit das von der Abgasrückführleitung 11 von der Entnahmestelle 6 entnommene Abgas dem Ventil 16 zugeführt. Innerhalb des Ventilgehäuses 17 ist ein erster Auslassraum 38 vorhanden, in den eine erste Auslassöffnung 19 mündet und ein zweiter Auslassraum 39, in den eine zweiten Auslassöffnung 20 mündet. An die erste Auslassöffnung 19 ist der Abgaswärmeübertrager 13 bzw. die zu dem Abgaswärmeübertrager 13 führende Abgasrückfuhrleitung 11 angeschlossen. An die zweite Auslassöffnung 20 ist die Bypassabgasleitung 40 angeschlossen.

Innerhalb des Ventilgehäuses 17 ist ein Ventilschieber 21 oder Schieberkoben angeordnet. Der Ventilschieber 21 ist dabei von einem ersten Gleitlagerelement 26 und einem zweiten Gkeitlagerelement 27 mittels einer Gleitlagerung gelagert. Das erste und zweite Gleitlagerelement 26, 27 sind dabei als Lagerringe 28 als gesonderte Bauteile zu dem Ventilgehäuse 17 ausgebildet. Der Ventilschieber 21 ist mit einer Ventilschieberstange 43 verbunden. Die Ventilschieberstange 43 ist fluiddicht in dem Ventilgehause 17 gelagert und mittels eines in Fig. 2 nicht dargestellten elektrischen Aktuators an der Ventilschieberstange 43 kann die Ventilschieberstange 43 und damit auch der Ventilschieber 21 in Richtung einer Schieberachse 22 hin und her bewegt werden, d. h. der Ventilschieber 21 kann eine Translationsbewegung in Richtung der Schieberachse 22 ausführen. Zwischen dem Ventilschieber 21 und dem Ventilgehäuse 17 bildet sich als ein als Ringraum 37 ausgebildeter Raum 36 aus. Der Ventilschieber 21 weist eine Mantelfläche 25 auf. Auf der Mantelfläche 25 des Ventilschiebers 21 liegen jeweils Lagerflächen 29 der beiden Lagerringe 28 auf, so dass sich zwischen der Lagefläche 29 des Lagerringes 28 und der Mantelfläche 25 des Ventilschiebers 21 eine Gleitlagerung zur Führung des Ventilschiebers 21 ausbildet. Der Ventilschieber 21 weist dabei in einem Schnitt senkrecht zu der Zeichenebene von Fig. 1 eine Kreisform auf, d. h. der Ventilschieber 21 weist eine Zylinderform auf.

In Fig. 2 ist eine zweite Stellung des Ventiischiebers 21 dargestellt. Zwischen dem Ringraum 37, die fluidleitend mit der Eintrittsöffnung 28 verbunden ist und dem ersten Auslassraum 38 und dem zweiten, Aushssraum 39 besteht keine fluidleitende Verbindung, weil der Ventilschieber 21 einen Lagerraum zwischen der Lagerfläche 29 der beiden Lagerringe 28 von dem Ventilschieber 21 sowohl für das erste Gleitlagerelement 26 als auch für das zweite Gleitlagerelement 27 verschlossen ist. Wird von dem nicht dargestellten elektrischen Aktuator der Ventilschieber 21 gemäß der Darstellung in Fig. 2 nach rechts verschoben in eine erste Stellung des Ventilschiebers 21, wird von dem Ventilschieber 21 ein Ringspalt zwischen dem Ventilschieber 21 und dem ersten Gleitlagerelement 26 frei gegeben, so dass dadurch eine fluidleitende Verbindung von der Eintrittsöffnung 18 bzw. dem Ringraum 37 zu dem ersten Ausfassraum 38 besteht. Dadurch kann Abgas von der Eintrittsöffnung 18 in die Bypassabgasleitung 40 einströmen, Bei einem Bewegen des Ventilschiebers 21 von der in Fig. 2 dargestellten zweiten Stellung in der Darstellung in Fig. 2 nach links zu einer dritten Stellung des Ventilsehiebers 21, wird von dem Ventilschieber 21 ein Ringspalt zwichen dem VentilSchieber 21 und dem zweiten Gleitlagerelement 27 freigegeben. Dadurch kann durch diesen freigegebenen Ringspalt das Abgas von der Eintrittsöffnung 18 in den Ringraum 37 und dem zweiten Auslassraum 39 einströmen. Somit kann in der dritten Stellung des Ventilschiebers 21 das Abgas von der Eintrittsöffnung 18 in den Abgaswärmaübertrager 13 eingeleitet werden. In einer Kalflaufphase der Brennkraftmaschine 2 befindet sich somit der Ventile schieber 21 in der ersten Stellung und in einer Phase mit ausreichende Betriebstemperatur der Brennkraftmaschine 2 befindet sich der Ventilschieber 21 in der dritten Stellung. Der Ventilschieber 21 wird somit von dem elektrischen Aktuator in Richtung des Richtungspteiles. 42 hin und her bewegt. In der zweiten Stellung des Ventilschiebers 21, beispielsweise wenn die Brennkraftmaschine 2 abgeschaltet ist, kann der Ventilschieber 21 auch lediglich nur dazu hin und her bewegt werden, dass sich Ablagerungen an dem Ventilschieber 21 abschaben bzw. entfernen,

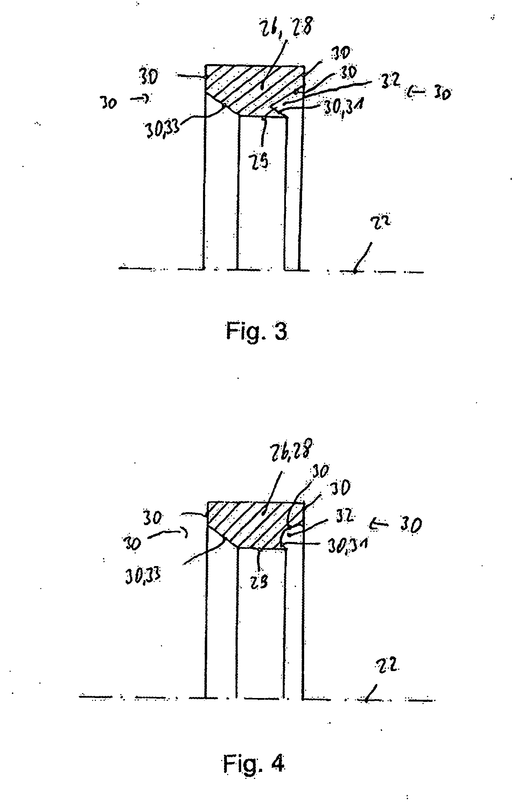

Auf dem Ventilschieber 21, insbesondere der Mantelfläche 25 des Ventilschiebers 21 bilden sich aufgrund des Abgases Ablagerungen, insbesondere Rußablagerungen oder Verschmutzungsablagerungen. Diese Ablagerungen können das Bewegen des Ventilschiebers 21 behindern oder stören, so dass dadurch die Funktionsfähigkeit des Ventilschiebers 21 nicht mehr gewährleistet ist. Damit diese Ablagerungen am Ventilschieber 21 effektiv und im Wesentlichen vollständig entfernt werden, sind die Lagerringe 28 mit einer Schabkante 31 versehen (Fig. 3 bis 6).

In Fig. 3 ist ein erstes Ausführungsbeispiel des Lagerringes 28 dargestellt. Der Lagerring 28 weist die Lagerfläche 29 auf. In einer radialen Entfernung bezüglich der Schieberachse 22 zu der Lagerfläche 29 weist der Lagerring 28 zwei Stirnfläche 30 auf. An der in Fig. 3 rechts dargestellten Stirnfläche 30 ist die Schabkante 31 ausgebildet als Teil der Stirnfläche 30. Dabei bildet sich zwischen der Lagerfläche 29 und der Stirnfläche 30 im Bereich des Lagerringes 28 ein spitzer Winkel innerhalb des Lagerringes 28 aus, so dass dadurch mit der Schabkante 31 eine effektive Reinigung von Ablagerungen auf der Mantelfläche 25 des Ventilschiebers 21 möglich ist. Aufgrund der Geometrie der Schabkante 31 ist außerdem an der rechten Stirnfläche 30 eine Aussparung 32 vorhanden. In der Aussparung 32 können sich kurzzeitig von der Mantelfläche 25 entfernte Ablagerungen ansammeln, die anschließend abfallen. Damit wird die Effektivität des Entfernens von Ablagerungen zusätzlich erhöht. An der in Fig. 3 links dargestellten Stirnfläche 30 des Lagerringes 28 sind Führungsflächen 33 oder Führungsstege vorhanden. Wird der Ventilschieber 21 beispielsweise von der ersten oder dritten Stellung in die zweite Stellung bewegt, kann der Ventilschieber 21 einen radialen Versatz bezüglich der Schieberachse 22 aufweisen. Damit der Ventilschieber 21 in den Lagerring 28 eingeführt wird, wird von der Führungsfläche 33 oder dem Führungssteg der Ventilschieber 21 bezüglich der Schieberachse 22 zentriert, so dass der Ventilschieber 21 problemlos in den Lagerraum zwischen Lagerfläche 29 des Lagerringes 28 eingeschoben werden kann. Dabei tritt zwischen der Führungsfläche 33 und der Lagerfläche 29 innerhalb des Lagerringes 28 ein stumpfer Winkel auf. Der Lagerring 28 weist somit an der Führungsfläche 33 eine konische Form zum Einführen des Ventilschiebers 21 in den Lagerraum zwischen der Lagerfläche 29 auf.

In Fig. 4 ist ein zweites Ausführungsbeispiel des Lagerringes 28 dargestellt. Das zweite Ausführungsbeispiel unterscheidet sich von dem ersten Ausführungsbeispiel gemäß Fig. 3 lediglich dadurch, dass die Aussparung 32 in dem Schnitt gemäß Fig. 4 eine konkave Begrenzung, insbesondere kreisförmige Begrenzung, an dem Lagerring 28 aufweist.

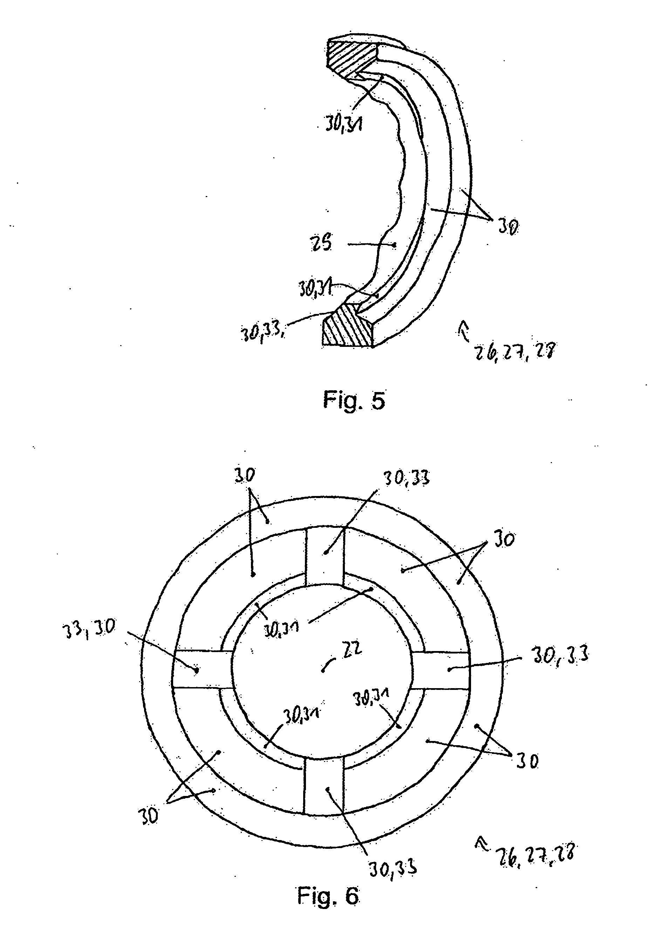

In Fig. 5 ist ein drittes Auführungsbeispiel des Lagerringes 28 in einer perspektivischen Ansicht dargestellt. An der in Fig. 5 rechts dargestellten Stirnfläche 30 des Lagerringes 28 ist eine Schabkante 31 gemäß dem ersten Ausführungsbeispiel in Fig. 3 vorhanden. Ferner ist in analoger Weise zu dem ersten Ausführungsbeispiel an der in Fig. 5 dargestellten linken stirnfläche 30 die Führungsfläche 33 oder der Führungssteg vorhanden. Die Ausdehnung der Lagerfläche 29 des Lagerringes 28 in Richtung der Schieberachse 22 ist dabei tangential bezüglich der Schieberachse 22 betracht, nicht konstant, so dass eine asymmetrische Steuerkante 34 und eine asymmetrische Schabkante 35 am Lagerring 28 auftritt. Beim Bewegen des Ventilschiebers 21 mit dem Lagerring 28 gemäß Fig. 5 von einer zweiten Stellung in eine erste bzw. dritte stellung des Ventilschiebers 21 wird kein vollständiger umlaufender Ringspalt zwischen dem Lagerring 28 und dem Ventilschieber 21 freigegeben, sondern zunächst nur einzelne Teilabschnitte des Ringspaltens. Erst bei einem weiteren Bewegen kommt es zu einem vollständigen Freigeben eines Ringspaltes. Damit kann die Steuerung des Abgasstromes in der Anfangsphase des Freigebens eines Strömungsraumes von der Eintrittsöffnung 18 in den ersten bzw. zweiten Auslassraum 38, 39 besser gesteuert werden. Außerdem werden Ablagerungen, die ausschließlich oder im Wesentlichen tangential, beispielsweise als Ringe, ausgebildet sind an der Mantelfläche 25 des Ventilschiebers 21 zunächst nur an lokalen Stellen (tangential betrachtet) kontaktiert, so dass es dadurch zu lokalen Spannungsspitzen und einem besseren Entfernen der Ablagerungen kommt.

In Fig. 6 ist ein viertes Ausführungsbeispiel des Lagerringes 28 in einer Vorderansicht dargestellt. Die Vorderansicht in Fig. 6 zeigt dabei den Lagerring 28 mit einer Schabkante 31 gemäß dem ersten Ausführungsbeispiel in Fig. 3. Außerdem sind an der Stirnfläche 30 mit der Schabkante 31 auch vier Führungsflächen 33 oder Führungsstege vorhanden. Die Führungsflächen 33 sind somit an der Stirnfläche 30 lediglich partiell ausgebildet. Tangential bezüglich der Schieberachse 22 betrachtet, liegen die Führungsflächen 33 nur abschnittsweise vor, und zwischen den Führungsflächen 33 sind wiederum abschnittsweise tangential betrachtet die Schabkanten 31 vorhanden. Dies ermöglicht es, dass an der Stirnfläche 30 einerseits eine effektive Reinigung der Mantelfläche 25 mittels der Schabkanten 31 möglich ist und andererseits durch die Führungsflächen 33 eine axiale Zentrierung des Ventilschiebers 1 bei einem radialen Versatz des Ventilschiebers 21' zuverlässig gewährleistet ist.

Insgesamt betrachtet sind mit dem erfindungsgemäßen Ventil 16 und der erfindungsgemäßen Anordnung 1 wesentliche Vorteile verbunden. Die an den Lagerringen 28 ausgebildeten Schabkanten 31 ermöglichen eine effektive und gründliche Reinigung der Mantelfläche 25 des Ventilschiebers 21, so dass ein sicherer und zuverlässiger Betrieb des Ventils 16 und damit der Anordnung 1 gewährleistet ist.

**Bezugszeichnliste**
- 1: Anordnung
- 2: Brennkraftmaschine
- 3: Dieselmotor
- 4: Abgasleitung
- 5: Abgaskrümmer
- 6: Entnahmestelle an der Abgasleitung
- 7: Rückführstelle an der Ladeluftleitung
- 8: Abgasturbine
- 9: Ladeluftleitung
- 10: Einlasskrümmer
- 11: Abgasrückführleitung
- 12: Ladeluftverdichter
- 13: Abgaswärmeübetrager
- 14: Ladeluftwärmeübertrager
- 15: Abgassteuerorgan
- 16: Ventil
- 17: Ventilgehäuse
- 18: Eintrittsöffnung
- 19: erste Auslassöffnung
- 20: zweite Auslassöffnung
- 21: Ventilschieber
- 22: Schieberachse
- 23: Welle
- 24: Einsaugöffnung
- 25: Mantelfläche

- 26: erstes Gleitlagerelement
- 27: zweites Gleitlagerelement
- 28: Lagerring
- 29: Lagerfläche
- 30: Stirnfläche
- 31: Schabkante
- 32: Aussparung
- 33: Führungsfläche
- 34: asymmetrische Steuerkante
- 35: asymmetrische Schabkante
- 36: Raum
- 37: Ringraum
- 38: erster Auslassraum
- 39: zweiter Auslassraum
- 40: Bypassabgasleitung
- 41: Eintrittsstutzen
- 42: Richtungspfeil
- 43: Ventilschieberstange

## Patentansprüche

1. Ventil (15) zum Steuern eines Fluidstromes, insbesondere eines Abgas- oder Ladeluftstromes, umfassend
- ein Ventilgehäuse (17),
- eine Eintrittsöffnung (18) für das Fluid,
- eine erste Auslassöffnung (19) für das Fluid,
- eine zweite Auslassöffnung (20) für das Fluid,
- einen in Richtung einer Schieberachse (22) bewegbaren Ventilschieber (21) mit einer Mantelfläche (25) zur Steuerung der aus der ersten Auslassöffnung(19) und/oder der zweiten Auslassöffnung (20) ausleitbaren Menge an Fluid,
- wenigstens eine Gleitlagerelement (26, 27) mit einer Lagerfläche (29) zur Lagerung und Abdichtung des Ventilschiebers (21) an der Mantelfläche (25) und mit wenigstens einer Stirnfläche (30),
- wobei vorzugsweise die Mantelfläche (25) und die Lagerfläche (29) parallel zu der Schieberachse (22) ausgerichtet sind,
**dadurch gekennzeichnet, dass**
an der wenigstens einen Stirnfläche (30) wenigstens eine Schabkante (31) zum Entfernen von Ablagerungen auf dem Ventilschieber (21) ausgebildet ist, indem an der Schabkante (31) die Lagerfläche (29) zu der wenigstens einen Stirnfläche (30) in einem spitzen Winkel ausgerichtet ist, wobei der spitze Winkel zwischen der Lagerfläche (29) und der wenigstens einen Stirnfläche (30) in einem Längsschnitt in Richtung der Schieberachse (22) auftritt und das wenigstens eine Gleitlagerelement (26, 27) wenigstens eine Führungsfläche (33) aufweist zur axialen Zentrierung des Ventilschiebers (21) beim Einführen in das wenigstens eine Gleitlagerelement (26, 27), wobei die Lagerfläche (29) zu der wenigstens einen Stirnfläche (30) an der wenigstens einen Führungsfläche (33) in einem stumpfen Winkel ausgerichtet ist und die wenigstens eine Führungsfläche (33) in tangentialer Richtung bezüglich der Schieberachse (22) partiell ausgebildet ist.

2. Ventil nach Anspruch 1, **dadurch gekennzeichnet, dass** der spitze Winkel zwischen 80° und 20°, vorzugsweise zwischen 70° und 30°, insbesondere zwischen 60° und 40°, liegt.

3. Ventil nach einem oder mehreren der vorhergehenden Ansprüche, **dadurch gekennzeichnet, dass** an dem wenigstens einen Gleitlagerelement (26, 27) im Bereich der wenigstens einen Schabkante (31) wenigstens eine Aussparung (32) ausgebildet ist.

4. Ventil nach Anspruch 3, **dadurch gekennzeichnet, dass** die wenigstens eine Aussparung (32) bezüglich der Schieberachse (22) radial nach der Lagerfläche (29) vorhanden ist und/oder die wenigstens Aussparung (32) an der Stirnfläche (30) ausgebildet ist.

5. Ventil nach einem oder mehreren der vorhergehenden Ansprüche, **dadurch gekennzeichnet, dass** das wenigstens eine Gleitlagerelement (26, 27) ein Lagerring (28) ist.

6. Ventil nach einem oder mehreren der vorhergehenden Ansprüche, **dadurch gekennzeichnet, dass** das wenigstens eine Gleitlagerelement (26, 27) einteilig mit dem Ventilgehäuse (17) oder als gesondertes Bauteil ausgebildet ist.

7. Ventil nach einem oder mehreren der vorhergehenden Ansprüche, **dadurch gekennzeichnet, dass** die Lagerfläche (29) des wenigstens einen Gleitlagerelementes (26, 27) axial zu der Schieberachse (22) eine unterschiedliche Ausdehnung aufweist, so dass sich eine asymmetrische Steuerkante (34) und/oder eine asymmetrische Schabkante (35) an dem wenigstens einen Gleitlagerelement (26, 27) ausbildet.

8. Ventil nach einem oder mehreren der vorhergehenden Ansprüche, **dadurch gekennzeichnet, dass** das Ventil (16) erstes und zweites Gleitlagerelement (26, 27) aufweist und das Ventilgehäuse (17) sowie die beiden Gleitlagerelemente (26, 27) einen Raum (36) einschließen, in welchem der Ventilschieber (21) angeordnet ist, so dass der Raum (36) bei einer Anordnung des Ventilschiebers (21) in dem Raum (36) ein Ringraum (37) ist und in den Raum (36) die Eintrittsöffnung (18) mündet.

9. Ventil nach einem oder mehreren der vorhergehenden Ansprüche, **dadurch gekennzeichnet, dass** das Ventil (16) einen ersten Auslassraum (38) und einen zweiten Auslassraum (39) aufweist, die erste Auslassöffnung (19) in den ersten Auslassraum (38) mündet und die zweite Auslassöffnung (20) in den zweiten Auslassraum (39) mündet.

10. Ventil nach Anspruch 9, **dadurch gekennzeichnet, dass** in einer ersten Stellung des Ventilschiebers (21) zwischen dem Raum (36) und damit der Eintrittsöffnung (18) und dem ersten Auslassraum (38) eine fluidleitende Verbindung besteht und zwischen dem Raum (36) und dem zweiten Auslassraum (39) keine fluidleitende Verbindung besteht, indem der Ventilschieber (21) einen Lagerraum zwischen der Lagerfläche (29) des ersten Gleitlagerelementes (26) frei gibt und den Lagerraum zwischen der Lagerfläche (29) des zweiten Gleitlagerelementes (27) verschließt und in einer zweiten Stellung des Ventilschiebers (21) zwischen dem Raum (36) und damit der Eintrittsöffnung (18) und dem ersten Auslassraum (38) keine fluidleitende Verbindung besteht und zwischen dem Raum (38) und dem zweiten Auslassraum (39) keine fluidleitende Verbindung besteht, indem der Ventilschieber (21) den Lagerraum zwischen der Lagerfläche (29) des ersten
Gleitlagerelementes (26) verschließt und den Lagerraum zwischen der Lagerfläche (29) des zweiten Gleitlagerelementes (27) verschließt und in einer dritten Stellung des Ventilschiebers (21) zwischen dem Raum (36) und damit der Eintrittsöffnung (18) und dem ersten Auslassraum (38) keine fluidleitende Verbindung besteht und zwischen dem Raum (36) und dem zweiten Auslassraum (39) eine fluidleitende Verbindung besteht, indem der Ventilschieber (21) den Lagerraum zwischen der Lagerfläche (29) des ersten Gleitlagerelementes (26) verschließt und den Lagerraum zwischen der Lagerfläche (29) des zweiten Gleitlagerelementes (27) frei gibt.

11. Anordnung (1) zur Rückführung und Kühlung von Abgas einer Brennkraftmaschine (2), insbesondere eines Dieselmotors (3), umfassend
- eine Abgasleitung (4), vorzugsweise mit einer Abgasturbine (8),
- eine Ladeluftleitung (9) mit einem, vorzugsweise von der Abgasturbine (8) antreibbaren, Ladeluftverdichter (12),
- eine Abgasrückführleitung (11) zur Leitung von Abgas von der Abgasleitung (4) zu der Ladeluftleitung (9),
- einen Abgaswärmeübertrager (13) zur Kühlung von Abgas in der Abgasrückführleitung (11),
- eine Bypassabgasleitung (40), welche den Abgaswärmeübertrager (13) umgeht,
- ein Abgassteuerorgan (15) zur Steuerung und/oder Regelung der durch den Abgaswärmeübertrager (13) und/oder die Bypassabgasleitung (40) leitbaren Menge an Abgas pro Zeiteinheit,
**dadurch gekennzeichnet, dass**
das Abgassteuerorgan (15) als ein Ventil (16) gemäß einem oder mehrerer der Ansprüche 1 bis 10 ausgebildet ist und vorzugsweise die erste Auslassöffnung (19) mit der Bypassabgasleitung (40) verbunden ist, die zweite Auslassöffnung (20) mit dem Abgaswärmeübertrager (13) verbunden ist und die Einlassöffnung (18) mit der Abgasrückführleitung (11) von der Brennkraftmaschine (2) verbunden ist.

## Claims

1. A valve (15) for controlling a fluid flow, in particular an exhaust gas or charge air flow, comprising
- a valve housing (17);
- an inlet opening (18) for the fluid;
- a first outlet opening (19) for the fluid;
- a second outlet opening (20) for the fluid;
- a valve gate (21) which can be moved in the direction of a gate axis (22) and has a lateral face (25) for controlling the quantity of fluid that can be discharged from the first outlet opening (19) and/or the second outlet opening (20);
- at least one sliding bearing element (26, 27), having a bearing face (29) for mounting and sealing the valve gate (21) on the lateral face (25) and further having at least one end face (30);
- the lateral face (25) and the bearing face (29) preferably being oriented parallel to the gate axis (22),
**characterized in that**
at least one scraper edge (31) for removing deposits from the valve gate (21) is provided on the at least one end face (30) by orienting the bearing face (29) on the scraper edge (31) at an acute angle relative to the at least one end face (30), wherein the acute angle between the bearing face (29) and the at least one end face (30) appears in a longitudinal section in the direction of the gate axis (22), and the at least one sliding bearing element (26, 27) comprises at least one guide surface (33) for axially centering the valve gate (21) during the insertion into the at least one sliding bearing element (26, 27), wherein the bearing surface (29) is oriented at an obtuse angle relative to the at least one end face (30) on the at least one guide surface (33) and the a portion of the at least one guide surface (33) is designed in the tangential direction relative to the gate axis (22).

2. The valve according to claim 1, **characterized in that** the acute angle ranges between 80° and 20°, preferably between 70° and 30°, and more particularly between 60° and 40°.

3. A valve according to one or more of the preceding claims, **characterized in that** at least one recess (32) is formed on the at least one sliding bearing element (26, 27) in the region of the at least one scraper edge (31).

4. The valve according to claim 3, **characterized in that** the at least one recess (32) is present radially downstream of the bearing surface (29) relative to the gate axis (22) and/or the at least one recess (32) is formed on the end face (30).

5. A valve according to one or more of the preceding claims, **characterized in that** the at least one sliding bearing element (26, 27) is a bearing ring (28).

6. A valve according to one or more of the preceding claims, **characterized in that** the at least one sliding bearing element (26, 27) is designed integrally with the valve housing (17) or as a separate component.

7. A valve according to one or more of the preceding claims, **characterized in that** the bearing surface (29) of the at least one sliding bearing element (26, 27) has a different extension axially relative to the gate axis (22), whereby an asymmetrical control edge (34) and/or an asymmetrical scraper edge (35) is formed on the at least one sliding bearing element (26, 27).

8. A valve according to one or more of the preceding claims, **characterized in that** the valve (16) comprises first and second sliding bearing elements (26, 27), and the valve housing (17) and the two sliding bearing elements (26, 27) enclose a space (36) in which the valve gate (21) is disposed, so that the space (36) is an annular space (37) if the valve gate (21) is disposed in the space (36) and the inlet opening (18) leads into the space (36).

9. A valve according to one or more of the preceding claims, **characterized in that** the valve (16) comprises a first outlet chamber (38) and a second outlet chamber (39), the first outlet opening (19) leads into the first outlet chamber (38), and the second outlet opening (20) leads into the second outlet chamber (39).

10. The valve according to claim 9, **characterized in that** in a first position of the valve gate (21) a fluid-conducting connection exists between the space (36), and thus the inlet opening (18), and the first outlet chamber (38) and no fluid-conducting connection exists between the space (36) and the second outlet chamber (39) **in that** the valve gate (21) opens a bearing chamber between the bearing surface (29) of the first sliding bearing element (26) and closes the bearing chamber between the bearing surface (29) of the second sliding bearing element (27), and in a second position of the valve gate (21) no fluid-conducting connection exists between the space (36), and thus the inlet opening (18), and the first outlet chamber (38) and no fluid-conducting connection exists between the space (38) and the second outlet chamber (39) **in that** the valve gate (21) closes the bearing chamber between the bearing surface (29) of the first sliding bearing element (26) and closes the bearing chamber between the bearing surface (29) of the second sliding bearing element (27), and in a third position of the valve gate (21) no fluid-conducting connection exists between the space (36), and thus the inlet opening (18), and the first outlet chamber (38) and a fluid-conducting connection exists between the space (36) and the second outlet chamber (39) **in that** the valve gate (21) closes the bearing chamber between the bearing surface (29) of the first sliding bearing elements (26) and opens the bearing chamber between the bearing surface (29) of the second sliding bearing element (27).

11. An assembly (1) for recirculating and cooling exhaust gas of an internal combustion engine (2), in particular of a diesel engine (3), comprising
- an exhaust gas pipe (4), preferably having an exhaust gas turbine (8);
- a charge air pipe (9) having a charge air compressor (12), which can preferably be driven by the exhaust gas turbine (8);
- an exhaust gas recirculation pipe (11) for conducting exhaust gas from the exhaust gas pipe (4) to the charge air pipe (9);
- an exhaust gas heat exchanger (13) for cooling exhaust gas in the exhaust gas recirculation pipe (11);
- a bypass exhaust gas pipe (40) extending around the exhaust gas heat exchanger (13); and
- an exhaust gas control member (15) for controlling the amount of exhaust gas that can be conducted per unit of time through the exhaust gas heat exchanger (13) and/or the bypass exhaust gas pipe (40),
**characterized in that**
the exhaust gas control member (15) is designed as a valve (16) according to one or more of claims 1 to 10 and preferably the first outlet opening (19) is connected to the bypass exhaust gas pipe (40), the second outlet opening (20) is connected to the exhaust gas heat exchanger (13), and the inlet opening (18) is connected to the exhaust gas recirculation pipe (11) from the internal combustion engine (2).

## Revendications

1. Soupape (15) de commande d'un flux de fluide, en particulier d'un flux de gaz d'échappement ou d'air de suralimentation, comprenant
- une cage de soupape (17),
- une ouverture d'entrée (18) pour le fluide,
- une première ouverture de sortie (19) pour le fluide,
- une deuxième ouverture de sortie (20) pour le fluide,
- un obturateur de soupape (21) mobile suivant une direction d'un axe d'obturateur (22) et comprenant une surface latérale (25) servant à la commande de la quantité de fluide pouvant être dirigée en sortant de la première ouverture de sorte (19) et/ou de la deuxième ouverture de sortie (20),
- au moins un élément de palier lisse (26, 27) comportant une surface de palier (29) servant au logement et à l'étanchéité de l'obturateur de soupape (21) sur la surface latérale (25), et comportant au moins une surface frontale (30),
- où la surface latérale (25) et la surface de palier (29) sont orientées, de préférence, parallèlement à l'axe d'obturateur (22),
**caractérisée en ce que**
au moins une arête de raclage (31) est configurée sur au moins la surface frontale (30) au moins au nombre de un, pour éliminer des dépôts se trouvant sur l'obturateur de soupape (21), tandis que la surface de palier (29) est orientée, sur l'arête de raclage (31), suivant un angle aigu par rapport à la surface frontale (30) au moins au nombre de un, où l'angle aigu formé entre la surface de palier (29) et la surface frontale (30) au moins au nombre de un apparaît dans une coupe longitudinale suivant la direction de l'axe d'obturateur (22), et l'élément de palier lisse (26, 27) au moins au nombre de un présente au moins une surface de guidage (33) servant au centrage axial de l'obturateur de soupape (21) lors de l'introduction dans l'élément de palier lisse (26, 27) au moins au nombre de un, ou la surface de palier (29) est orientée suivant un angle obtus par rapport à la surface frontale (30) au moins au nombre de un située sur la surface de guidage (33) au moins au nombre de un, et la surface de guidage (33) au moins au nombre de un est configurée partiellement dans une direction tangentielle par rapport à l'axe d'obturateur (22).

2. Soupape selon la revendication 1, **caractérisée en ce que** l'angle aigu est compris entre 80° et 20°, de préférence entre 70° et 30°, en particulier entre 60° et 40°.

3. Soupape selon l'une des deux ou les deux revendications précédentes, **caractérisée en ce qu'**au moins un évidement (32) est configuré sur l'élément de palier lisse (26, 27) au moins au nombre de un, dans la zone de l'arête de raclage (31) au moins au nombre de un.

4. Soupape selon la revendication 3, **caractérisée en ce que** l'évidement (32) au moins au nombre de un est présent en étant placé radialement en aval de la surface de palier (29), par rapport à l'axe d'obturateur (22), et / ou l'évidement (32) au moins au nombre de un est configuré sur la surface frontale (30).

5. Soupape selon l'une quelconque ou plusieurs des revendications précédentes, **caractérisée en ce que** l'élément de palier lisse (26, 27) au moins au nombre de un est une bague de roulement (28).

6. Soupape selon l'une quelconque ou plusieurs des revendications précédentes, **caractérisée en ce que** l'élément de palier lisse (26, 27) au moins au nombre de un est configuré en formant une seule et même pièce avec la cage de soupape (17) ou bien comme un composant disposé séparément.

7. Soupape selon l'une quelconque ou plusieurs des revendications précédentes, **caractérisée en ce que** la surface de palier (29) de l'élément de palier lisse (26, 27) au moins au nombre de un présente, axialement, une étendue différente par rapport à l'axe d'obturateur (22), de sorte qu'il se forme, sur l'élément de palier lisse (26, 27) au moins au nombre de un, un bord de commande asymétrique (34) et/ou une arête de raclage (35) asymétrique.

8. Soupape selon l'une quelconque ou plusieurs des revendications précédentes, **caractérisée en ce que** la soupape (16) présente un premier et un deuxième élément de palier lisse (26, 27), et la cage de soupape (17) ainsi que les deux éléments de palier lisse (26, 27) comprennent un espace (36) dans lequel est disposé l'obturateur de soupape (21), de sorte que l'espace (36) est un espace annulaire (37) dans le cas d'un agencement de l'obturateur de soupape (21) placé dans l'espace (36), et l'ouverture d'entrée (18) débouche dans l'espace (36).

9. Soupape selon l'une quelconque ou plusieurs des revendications précédentes, **caractérisée en ce que** la soupape (16) présente un premier espace de sortie (38) et un deuxième espace de sortie (39), la première ouverture de sortie (19) débouche dans le premier espace de sortie (38), et la deuxième ouverture de sortie (20) débouche dans le deuxième espace de sortie (39).

10. Soupape selon la revendication 9, **caractérisée en ce que**, dans une première position de l'obturateur de soupape (21), il existe une communication permettant d'acheminer le fluide entre l'espace (36), et donc l'ouverture d'entrée (18), et le premier espace de sortie (38), et il n'existe aucune communication permettant d'acheminer le fluide, entre l'espace (36) et le deuxième espace de sortie (39), tandis que l'obturateur de soupape (21) libère un espace de palier formé entre la surface de palier (29) du premier élément de palier lisse (26) et ferme l'espace de palier formé entre la surface de palier (29) du deuxième élément de palier lisse (27) et, dans une deuxième position de l'obturateur de soupape (21), il n'existe aucune communication permettant d'acheminer le fluide entre l'espace (36), et donc l'ouverture d'entrée (18), et le premier espace de sortie (38), et il n'existe aucune communication permettant d'acheminer le fluide entre l'espace (38) et le deuxième espace de sortie (39), tandis que l'obturateur de soupape (21) ferme l'espace de palier formé entre la surface de palier (29) du premier élément à palier lisse (26) et ferme l'espace de palier formé entre la surface de palier (29) du deuxième élément de palier lisse (27) et, dans une troisième position de l'obturateur de soupape (21), il n'existe aucune communication permettant d'acheminer le fluide entre l'espace (36), et donc l'ouverture d'entrée (18), et le premier espace de sortie (38), et il existe une communication permettant d'acheminer le fluide entre l'espace (36) et le deuxième espace de sortie (39), tandis que l'obturateur de soupape (21) ferme l'espace de palier formé entre la surface de palier (29) du premier élément de palier lisse (26) et libère l'espace de palier formé entre la surface de palier (29) du deuxième élément de palier lisse (27).

11. Agencement (1) servant au recyclage et au refroidissement de gaz d'échappement d'un moteur à combustion interne (2), en particulier d'un moteur diesel (3), comprenant
- une conduite de gaz d'échappement (4) comprenant, de préférence, une turbine à gaz d'échappement (8),
- une conduite d'air de suralimentation (9) comprenant un compresseur d'air de suralimentation (12) pouvant être entraîné, de préférence, par la turbine à gaz d'échappement (8),
- une conduite de recyclage de gaz d'échappement (11) servant au guidage de gaz d'échappement depuis la conduite de gaz d'échappement (4) jusqu'à la conduite d'air de suralimentation (9),
- un échangeur de chaleur de gaz d'échappement (13) servant au refroidissement de gaz d'échappement dans la conduite de recyclage de gaz d'échappement (11),
- une conduite de dérivation de gaz d'échappement (40) qui contourne l'échangeur de chaleur de gaz d'échappement (13),
- un organe de commande de gaz d'échappement (15) servant à la commande et/ou à la régulation de la quantité de gaz d'échappement, par unité de temps, pouvant être dirigée à travers l'échangeur de chaleur de gaz d'échappement (13) et/ou à travers la conduite de dérivation de gaz d'échappement (40),
**caractérisé**
**en ce que** l'organe de commande de gaz d'échappement (15) est conçu comme une soupape (16) selon l'une quelconque ou plusieurs des revendications 1 à 10 et, de préférence, la première ouverture de sortie (19) est reliée à la conduite de dérivation de gaz d'échappement (40), la deuxième ouverture de sortie (20) est reliée à l'échangeur de chaleur de gaz d'échappement (13), et l'ouverture d'entrée (18) est reliée à la conduite de recyclage de gaz d'échappement (11) du moteur à combustion interne (2).
